(19) Europäisches Patentamt
European Patent Office
Office européen des brevets

(11) **EP 4 583 044 A1**

(12) **EUROPEAN PATENT APPLICATION**
published in accordance with Art. 153(4) EPC

(43) Date of publication:
**09.07.2025 Bulletin 2025/28**

(51) International Patent Classification (IPC):
**G06T 7/00** (2017.01)     **G06T 7/10** (2017.01)

(21) Application number: **23860126.4**

(52) Cooperative Patent Classification (CPC):
**G06T 7/00; G06T 7/10; G06V 10/70**

(22) Date of filing: **22.08.2023**

(86) International application number:
**PCT/JP2023/030132**

(87) International publication number:
**WO 2024/048363 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.09.2022 JP 2022139818**

(71) Applicant: **OMRON Corporation
Kyoto 600-8530 (JP)**

(72) Inventors:
• **NISHIMOTO UCHIDA, Shihori
Kyoto-shi, Kyoto 600-8530 (JP)**
• **NISHIMOTO, Takashi
Kyoto-shi, Kyoto 600-8530 (JP)**

(74) Representative: **Appelt, Christian W.
Boehmert & Boehmert
Anwaltspartnerschaft mbB
Pettenkoferstrasse 22
80336 München (DE)**

(54) **TRAINING DEVICE, IMAGE SEGMENTATION DEVICE, TRAINING METHOD, AND PROGRAM**

(57)     A learning apparatus configured to train a model in an image segmentation apparatus configured to perform segmentation of a recognition target in an image using the model, the learning apparatus including: a first evaluation value acquisition unit configured to acquire a first evaluation value calculated by a first loss function configured to evaluate a feature configured to identify the recognition target in the image; a second evaluation value acquisition unit configured to acquire a second evaluation value calculated by a second loss function configured to evaluate a continuity of the recognition target identified in the image; and a learning execution unit configured to perform learning to optimize the model by performing backpropagation based on the first evaluation value and the second evaluation value.

[FIG. 4]

**Description**

**CROSS REFERENCE TO RELATED APPLICATIONS**

This application claims the benefit of priority to Japanese Patent Application No. 2022-139818 filed on September 2, 2022, the disclosure of which is incorporated herein by reference.

**TECHNICAL FIELD**

The present invention relates to a learning apparatus, an image segmentation apparatus, a learning method, and a program.

**BACKGROUND ART**

In everyday life and in industrial settings, there are numerous situations in which linear-shaped objects are to be recognized. For this reason, there is a need for a technology that can accurately recognize linear-shaped objects in the field of image recognition technology, which has been utilized in recent years.
For example, Patent Document 1 discloses a method to improve the resolution of recognition for linear cracks and other objects by semantic segmentation using deep learning that assigns labels to all pixels in an image.

**CITATION LIST**

**PATENT LITERATURE**

Patent Document 1: JP 2021-184163 A

**SUMMARY OF INVENTION**

**TECHNICAL PROBLEM**

However, the known methods cannot accurately and efficiently evaluate features such as the continuity of linear-shaped objects and indefinite shapes of their contours.
An object of the present invention is to provide a technique of accurately and efficiently recognizing linear-shaped objects.

**SOLUTION TO PROBLEM**

To achieve the above-described object, the present invention employs the following configurations.
A learning apparatus according to an aspect of the present invention is configured to train a model in an image segmentation apparatus configured to perform segmentation of a recognition target in an image using the model, the learning apparatus including: a first evaluation value acquisition unit configured to acquire a first evaluation value calculated by a first loss function configured to evaluate a feature configured to identify the recognition target in the image; a second evaluation value acquisition unit configured to acquire a second evaluation value calculated by a second loss function configured to evaluate a continuity of the recognition target identified in the image; and a learning execution unit configured to perform learning to optimize the model by performing backpropagation based on the first evaluation value and the second evaluation value.
With the above-mentioned configuration, the accuracy of evaluation for the features of the continuity of the linear-shaped object is improved, and thus a model that correctly recognizes a linear-shaped object can be generated.
A third evaluation value acquisition unit configured to acquire a third evaluation value calculated by a third loss function configured to evaluate a feature that emphasizes a contour of the recognition target may be provided. The learning execution unit may perform learning to optimize the model by performing backpropagation based on the first evaluation value, the second evaluation value, and the third evaluation value. In this manner, the accuracy of evaluation for the features of contours of indefinite shapes of linear-shaped objects is improved, and thus a model that correctly recognizes a linear-shaped object can be generated.
The second evaluation value acquisition unit may include: a first element product calculation unit configured to calculate a first element product matrix obtained by multiplying elements of correct matrix data indicating a correct position of a segmentation mask of the recognition target, and matrix data obtained by moving the correct position of the segmentation mask; a second element product calculation unit configured to calculate a second element product matrix obtained by multiplying elements of prediction matrix data indicating a predicted position of the segmentation mask of the recognition target, and matrix data obtained by moving the predicted position of the segmentation mask as with the correct segmentation mask; and an evaluation value calculation unit configured to calculate the second evaluation value with a difference between the first element product matrix and the second element product matrix as the second loss function. This enables learning of a model suitable for evaluating the features of the continuity of linear-shaped objects.

The recognition target may be an object having a linear shape, and the first element product calculation unit may calculate a first element product matrix obtained by multiplying elements of matrix data obtained by moving the correct position of the segmentation mask in a longitudinal direction of the linear shape. This enables learning of a model suitable for evaluating the features of the continuity of linear-shaped objects.

An image segmentation apparatus according to an aspect of the present invention is configured to perform segmentation of a recognition target in an image using a model, in which the model is a model trained by the learning apparatus according to Supplementary Note 1, and the image segmentation apparatus comprises a segmentation execution unit configured to perform the segmentation of the recognition target in the image using the model learned. In this manner, the accuracy of evaluation for the features of the continuity of the linear-shaped object is improved, and thus linear-shaped objects can be correctly recognized.

A learning method according to an aspect of the present invention is a method of training a model in an image segmentation apparatus configured to perform segmentation of a recognition target in an image using the model, the learning method including the steps of: acquiring a first evaluation value calculated by a first loss function configured to evaluate a feature configured to identify the recognition target in the image; acquiring a second evaluation value calculated by a second loss function configured to evaluate a continuity of the recognition target identified in the image; and performing learning to optimize the model by performing backpropagation based on the first evaluation value and the second evaluation value. With the above-mentioned configuration, the accuracy of evaluation for the features of the continuity of the linear-shaped object is improved, and thus a model that correctly recognizes a linear-shaped object can be generated.

A program according to an aspect of the present invention is a program for a computer configured to execute training of a model in an image segmentation apparatus configured to perform segmentation of a recognition target in an image using the model, the program being configured to cause the computer to function as: a first evaluation value acquisition unit configured to acquire a first evaluation value calculated by a first loss function configured to evaluate a feature configured to identify the recognition target in the image; a second evaluation value acquisition unit configured to acquire a second evaluation value calculated by a second loss function configured to evaluate a continuity of the recognition target identified in the image; and a learning execution unit configured to perform learning to optimize the model by performing backpropagation based on the first evaluation value and the second evaluation value. With the above-mentioned configuration, the accuracy of evaluation for the features of the continuity of the linear-shaped object is improved, and thus a model that correctly recognizes a linear-shaped object can be generated.

## ADVANTAGEOUS EFFECTS OF INVENTION

According to the present invention, it is possible to provide a technique of accurately and efficiently recognizing linear-shaped objects.

## BRIEF DESCRIPTION OF DRAWINGS

FIG. 1 is a diagram illustrating an overview of a learning apparatus 1 and an image segmentation apparatus 2 according to the embodiment of the present invention.

FIG. 2 is a diagram illustrating an exemplary hardware configuration of the learning apparatus 1 and the image segmentation apparatus 2 according to the embodiment of the present invention.

FIG. 3 is a diagram illustrating an exemplary functional configuration of the learning apparatus 1 and the image segmentation apparatus 2 according to the embodiment of the present invention.

FIG. 4 is a flowchart illustrating a procedure for learning of a model by the learning apparatus 1 according to the embodiment of the present invention.

FIG. 5 is a diagram for describing a calculation method of a second evaluation value by the learning apparatus 1 according to the embodiment of the present invention.

FIG. 6 is a flowchart illustrating a procedure for segmentation by an image segmentation apparatus 2 according to the embodiment of the present invention.

FIG. 7 is a diagram for describing segmentation of a linear-shaped object according to the embodiment of the present invention.

**DESCRIPTION OF EMBODIMENTS**

An embodiment according to an aspect of the present invention (hereinafter referred to also as "the present embodiment") is described below with reference to the drawings. However, the embodiment described below is merely an example of the invention in all respects. It goes without saying that various improvements and variations may be made without departing from the scope of the invention. In other words, in implementing the invention, specific configurations according to the embodiments may be adopted as appropriate. Although the data in this embodiment is described in natural language, it is more specifically specified in a pseudo-language, command, parameter, machine language, etc., which can be recognized by a computer.

§1 Application Example

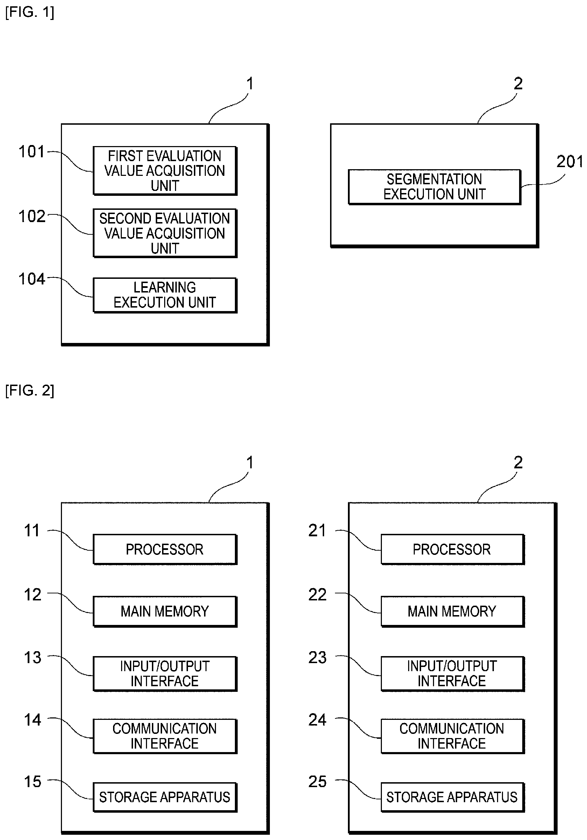

With reference to FIG. 1, an exemplary scene to which the present invention is applied is described. FIG. 1 is a diagram illustrating an overview of a learning apparatus 1 and an image segmentation apparatus 2 according to the present invention. The image segmentation apparatus 2 performs instance segmentation of a recognition target in an image using a learned model that has been trained by the learning apparatus in a segmentation execution unit 201.
The learned model that has been trained by the learning apparatus is suitable for segmentation of linear-shaped objects such as wires and electric cables. The learning apparatus 1 acquires a first evaluation value calculated by a first loss function in a first evaluation value acquisition unit 101, acquires a second evaluation value calculated by a second loss function in a second evaluation value acquisition unit 102, and executes learning by backpropagation based on the first evaluation value and the second evaluation value in a learning execution unit 104. The first evaluation value is a value that evaluates the features that identify the recognition target in the image, and the second evaluation value is a value that evaluates the continuity of the recognition target identified in the image.

§2 Exemplary Configuration

1. Hardware Configuration

Next, with reference to FIG. 2, the following describes exemplary hardware configurations of the learning apparatus 1 and the image segmentation apparatus 2 according to the present embodiment.
As illustrated in FIG. 2, the learning apparatus 1 is a computer that includes, as hardware resources, a processor 11, a main memory 12, an input/output interface 13, a communication interface 14, and a storage apparatus 15. The storage apparatus 15 is a computer-readable recording medium such as a semiconductor memory (e.g., a volatile memory or a nonvolatile memory), or a disk medium (e.g., a magnetic recording medium or a magneto-optical recording medium). The storage apparatus 15 stores programs for causing the processor 11 to train a model for segmentation of the recognition target in the image, models to be trained, data sets of images to be used for training, and the like. The programs are read from the storage apparatus 15 into the main memory 12, and interpreted and executed by the processor 11 to execute various functions.
The image segmentation apparatus 2 is a computer that includes, as hardware resources, a processor 21, a main memory 22, an input/output interface 23, a communication interface 24, and a storage apparatus 25. The storage apparatus 25 is a computer-readable recording medium such as a semiconductor memory (e.g., a volatile memory or a nonvolatile memory), or a disk medium (e.g., a magnetic recording medium or a magneto-optical recording medium). The storage apparatus 25 stores programs for causing the processor 21 to execute segmentation of the recognition target in the image using learned models, and learned models. The programs are read from the storage apparatus 25 into the main memory 22 and interpreted and executed by the processor 21 to execute various functions.

2. Functional Configuration

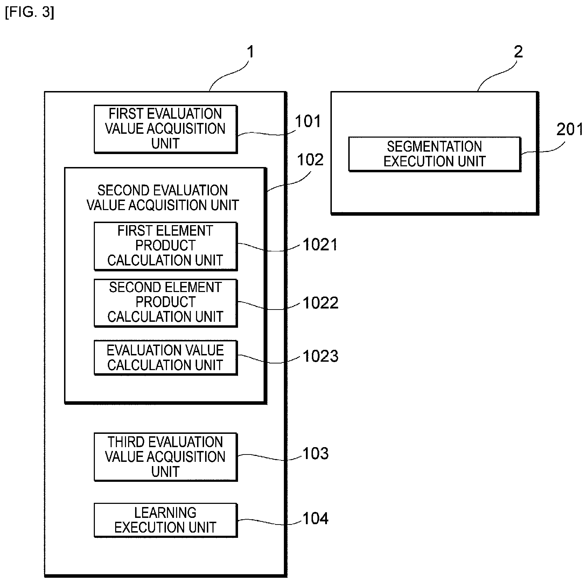

Next, with reference to FIG. 3, exemplary functional configurations of the learning apparatus 1 and the image segmentation apparatus 2 according to the present embodiment are described. FIG. 3 is a block diagram illustrating a function module executed by the processor 11 of the learning apparatus 1 and a processor 12 of the image segmentation apparatus 2. As illustrated in FIG. 3, the function modules executed by the processor 11 of the learning apparatus 1 include the first evaluation value acquisition unit 101, the second evaluation value acquisition unit 102, a third evaluation value acquisition unit 103, and the learning execution unit 104. The second evaluation value acquisition unit 102 includes a first element product calculation unit 1021, a second element product calculation unit 1022, and an evaluation value calculation unit 1023.
In addition, the function module executed by the processor 21 of the image segmentation apparatus 2 includes the segmentation execution unit 201.

§3 Exemplary Operation

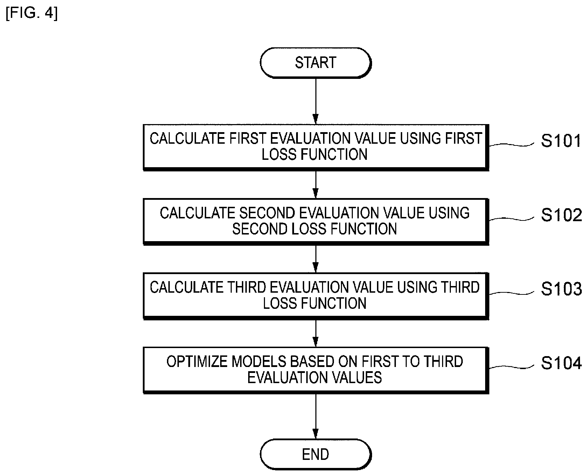

Next, a procedure for learning of a model by the learning apparatus 1 according to the present embodiment is described with reference to the flowchart of FIG. 4. The data set of images to be used for machine learning includes linear-shaped objects such as wires and electric cables, and machine learning optimizes the model for correct segmentation of these linear-shaped objects as recognition targets.

First, in the first evaluation value acquisition unit 101, the first evaluation value is calculated using a loss function (first loss function) for evaluating features for performing instance segmentation of training images (step S101). As a loss function, a discriminative loss may be used, for example.

Next, in the second evaluation value acquisition unit 102, the second evaluation value is calculated using a loss function (second loss function) for evaluating the continuity of the recognition target identified in the training image (step S102).

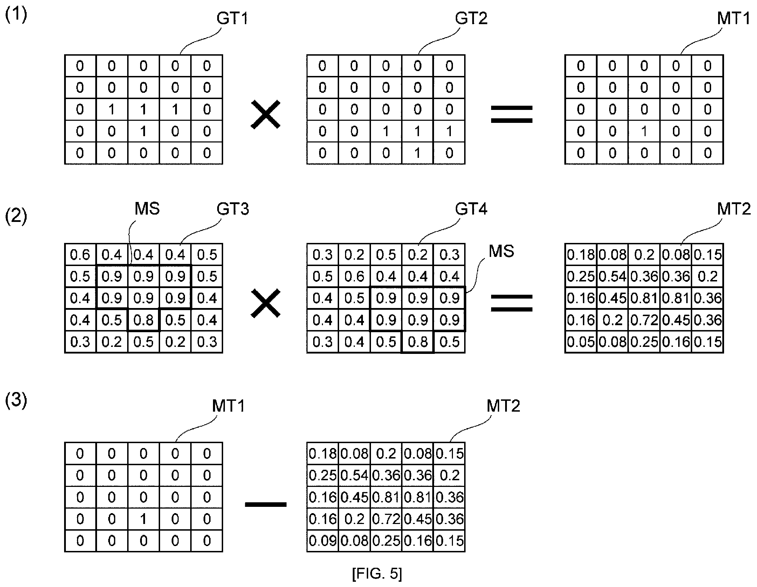

The calculation of the second evaluation value is elaborated with reference to FIG. 5. First, the first element product calculation unit 1021 calculates a first element product matrix (MT1) by multiplying elements of a correct matrix (GT1) corresponding to correct data (ground truth) indicating a correct position of the segmentation mask for the recognition target in the image (the region of the element indicated by "1" in the drawing), and a matrix (GT2) obtained by moving the position of the segmentation mask with respect to the GT1 (step (1)).

In the case where the recognition target is a linear-shaped object, the first element product calculation unit 1021 may set the GT2 as a matrix obtained by moving in the longitudinal direction of the linear shape the correct position of the segmentation mask in the matrix GT1.

Here, the element product matrix MT1 ($M_{k, \Delta h, \Delta w}$) of the matrix GT1 (M (0, 0)) and the matrix GT2 (M ($\Delta h$, $\Delta w$)) obtained by moving the mask position by h in a vertical direction and by w in a lateral direction can be expressed by the following equation.

[Equation 1]

$$M_{k,\Delta h,\Delta w} = M(0,0) \otimes M(\Delta h, \Delta w)$$

Next, the second element product calculation unit 1022 calculates a second element product matrix (MT2) by multiplying elements of a prediction matrix (GT3) indicating a predicted position of the segmentation mask of the recognition target (a region MS surrounded by the frame in the drawing), and a matrix obtained by moving the position of the segmentation mask with respect to the GT3 (GT4) (step (2)).

Note that, the movement of the position of the segmentation mask with respect to the matrix GT3 is performed in the same manner as the movement of the position of the segmentation mask with respect to the matrix GT1 in the step (1). The element product matrix MT2 of the matrix GT3 and the matrix GT4 obtained by moving the mask position by h in the vertical direction and by w in the lateral direction can be expressed by the following equations.

[Equation 2]

$$\hat{M}_{k,\Delta h,\Delta w} = \hat{M}(0,0) \otimes \hat{M}(\Delta h, \Delta w)$$

Note that

[Equation 3]

$$\hat{M}(0,0)$$

is the matrix GT3

[Equation 4]

$$\hat{M}(\Delta h, \Delta w)$$

is the matrix GT4

[Equation 5]

$$\hat{M}_{k,\Delta h,\Delta w}$$

is the element product matrix MT2.

Next, the evaluation value calculation unit 1023 calculates the second evaluation value with the difference between the first element product matrix MT1 obtained in the step (1) and the second element product matrix MT2 obtained in the step (2) as the second loss function (step (3)). The second loss function ($L_{smooth}$) can be expressed by the following equation. In the following equation, A[i, j] represents the element in the i-th row and j-th column of matrix A. In addition, N corresponds to the batch size during the training. Use of $L_{smooth}$ enables learning in consideration of continuity, but it also has the effect of blurring the contours of the recognition target. Therefore, in the next step, a loss function that emphasizes the contours is utilized.

[Equation 6]

$$L_{smooth} = \sum_{k=1}^{N} \sum_{i}^{h} \sum_{j}^{w} |\hat{M}_{k,\Delta h,\Delta w}[i,j] - M_{k,\Delta h,\Delta w}[i,j]|$$

Next, the third evaluation value acquisition unit 103 calculates a third evaluation value using a loss function (third loss function) for evaluating a feature that emphasizes the contour of the recognition target (step S103). The third evaluation value is obtained by calculating the loss function using M', which is obtained by weighting with the contour the correct data (GT) of the semantic mask of the recognition target. Specifically, a focal loss ($L_{edge}$) can be used as in the following equation, for example.

[Equation 7]

$$L_{edge} = L_{focal}(M', \hat{M})$$

M' is a semantic GT mask weighted by the contour, and is given by the following equation. F is an edge image that is calculated from the correct data, and normalized in the range of [0, 1]. Pixels equal to or greater than a threshold value thr on the edge image are emphasized by $\alpha$ (e.g., $\alpha=2$) times weighting.

[Equation 8]

$$M' = \begin{cases} 1 & (F < \text{thr}) \\ \alpha & (F \geq \text{thr}) \end{cases}$$

Calculating the focal loss of the prediction mask output from the model and the mask M' with the emphasized edge enables learning of the feature that emphasizes the contour.

Next, the learning execution unit 104 optimizes the model by performing backpropagation based on the first evaluation value calculated at step S101, the second evaluation value calculated at step S102 and the third evaluation value calculated at step S103 (step S104).

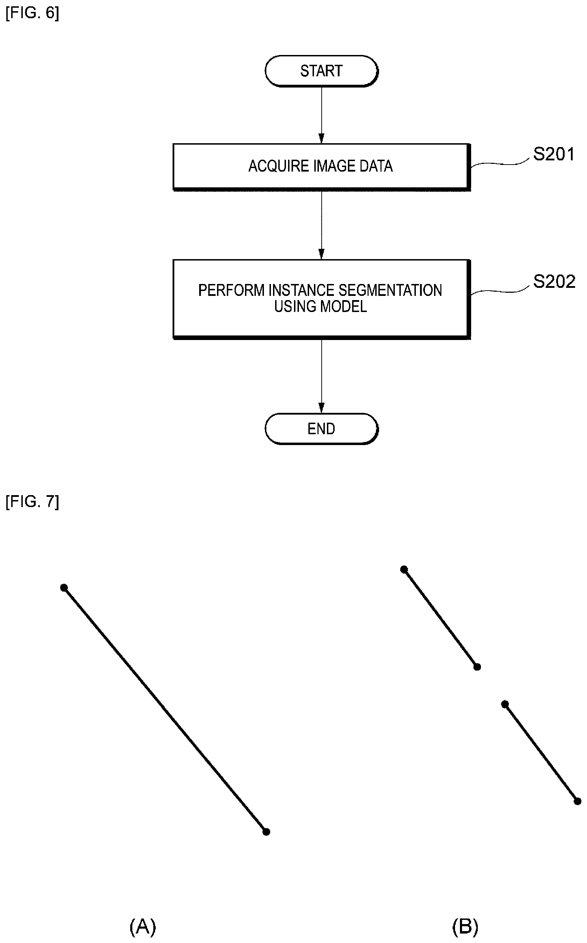

Next, a procedure for segmentation by the image segmentation apparatus 2 according to the present embodiment is described with reference to the flowchart of FIG. 6.

The image segmentation apparatus 2 acquires image data to be subjected to segmentation (step S201).

Next, the segmentation execution unit 201 executes instance segmentation of the image data using the model optimized by the learning apparatus 1 (step S202).

As described above, according to the present embodiment, the learning model for performing image segmentation is optimized using an evaluation value calculated by a loss function that evaluates the continuity of the recognition target, in addition to an evaluation value calculated by a loss function such as a discriminative loss, which is commonly used. This enables generation of a learning model suitable for evaluating the features of the continuity of linear-shaped objects. In the segmentation of elongated objects such as electric cables, segmentation prediction may result in a broken shape as illustrated in FIG. 7(B) even when the object actually has a shape that connects two points as illustrated in FIG. 7(A). According to the present embodiment, the model is evaluated in consideration of the continuity, and thus a model that does not generate such broken masks can be obtained.

Further, since the learning model for image segmentation is optimized by adding the evaluation value calculated by the loss function weighted by the contour of the recognition target, it is possible to obtain a model that is adapted to the features of indefinite contours of linear-shaped objects. For example, according to this embodiment, it is possible to accurately generate masks even for a fence composed of intertwined wires and the like, for which it may be difficult to accurately recognize the contours of the overlapping parts.

The model of segmentation according to the present embodiment may be applied to semantic segmentation as well, although it can perform instance segmentation with good accuracy.

The above-described embodiments of the present invention are merely examples of the present invention in every respect. It goes without saying that various improvements and variations may be made without departing from the scope of the invention. Some or all of the above embodiments may also be described as, but not limited to, the following supplementary notes.

Supplementary Note 1

A learning apparatus configured to train a model in an image segmentation apparatus configured to perform segmentation of a recognition target in an image using the model, the learning apparatus including:

a first evaluation value acquisition unit configured to acquire a first evaluation value calculated by a first loss function configured to evaluate a feature configured to identify the recognition target in the image;
a second evaluation value acquisition unit configured to acquire a second evaluation value calculated by a second loss function configured to evaluate a continuity of the recognition target identified in the image; and
a learning execution unit configured to perform learning to optimize the model by performing backpropagation based on the first evaluation value and the second evaluation value.

Supplementary Note 2

The learning apparatus according to Supplementary Note 1, further including: a third evaluation value acquisition unit configured to acquire a third evaluation value calculated by a third loss function configured to evaluate a feature that emphasizes a contour of the recognition target, in which
the learning execution unit performs learning to optimize the model by performing backpropagation based on the first evaluation value, the second evaluation value, and the third evaluation value.

Supplementary Note 3

The learning apparatus according to Supplementary Note 1, in which the second evaluation value acquisition unit includes:

a first element product calculation unit configured to calculate a first element product matrix obtained by multiplying elements of correct matrix data indicating a correct position of a segmentation mask of the recognition target, and matrix data obtained by moving the correct position of the segmentation mask;

a second element product calculation unit configured to calculate a second element product matrix obtained by multiplying elements of prediction matrix data indicating a predicted position of the segmentation mask of the recognition target, and matrix data obtained by moving the predicted position of the segmentation mask as with the correct segmentation mask; and

an evaluation value calculation unit configured to calculate the second evaluation value with a difference between the first element product matrix and the second element product matrix as the second loss function.

Supplementary Note 4

The learning apparatus according to Supplementary Note 3, in which the recognition target is an object having a linear shape, and

the first element product calculation unit calculates a first element product matrix obtained by multiplying elements of matrix data obtained by moving the correct position of the segmentation mask in a longitudinal direction of the linear shape.

Supplementary Note 5

An image segmentation apparatus configured to perform segmentation of a recognition target in an image using a model, in which

the model is a model trained by the learning apparatus according to Supplementary Note 1, and
the image segmentation apparatus comprises a segmentation execution unit configured to perform the segmentation of the recognition target in the image using the model learned.

Supplementary Note 6

A learning method of training a model in an image segmentation apparatus configured to perform segmentation of a recognition target in an image using the model, the learning method including the steps of:

acquiring a first evaluation value calculated by a first loss function configured to evaluate a feature configured to identify the recognition target in the image; acquiring a second evaluation value calculated by a second loss function configured to evaluate a continuity of the recognition target identified in the image; and
performing learning to optimize the model by performing backpropagation based on the first evaluation value and the second evaluation value.

Supplementary Note 7

A program for a computer configured to execute training of a model in an image segmentation apparatus configured to perform segmentation of a recognition target in an image using the model, the program being configured to cause the computer to function as:

a first evaluation value acquisition unit configured to acquire a first evaluation value calculated by a first loss function configured to evaluate a feature configured to identify the recognition target in the image;
a second evaluation value acquisition unit configured to acquire a second evaluation value calculated by a second loss function configured to evaluate a continuity of the recognition target identified in the image; and
a learning execution unit configured to perform learning to optimize the model by performing backpropagation based on the first evaluation value and the second evaluation value.

**REFERENCE SIGNS LIST**

1...Learning Apparatus, 2... Image Segmentation Apparatus, 11, 21... Processor, 12, 22... Main Memory, 13, 23... Input/Output Interface, 14, 24... Communication Interface, 15, 25... Storage Apparatus, 101... First Evaluation Value Acquisition Unit, 102... Second Evaluation Value Acquisition Unit, 103...Third Evaluation Value Acquisition Unit, 104... Learning Execution Unit, 201... Segmentation Execution Unit, 1021... First Element Product Calculation Unit, 1022... Second Element Product Calculation Unit, 1023... Evaluation Value Calculation Unit

**EP 4 583 044 A1**

**Claims**

1. A learning apparatus configured to train a model in an image segmentation apparatus configured to perform segmentation of a recognition target in an image using the model, the learning apparatus including:

    a first evaluation value acquisition unit configured to acquire a first evaluation value calculated by a first loss function configured to evaluate a feature configured to identify the recognition target in the image;
    a second evaluation value acquisition unit configured to acquire a second evaluation value calculated by a second loss function configured to evaluate a continuity of the recognition target identified in the image; and
    a learning execution unit configured to perform learning to optimize the model by performing backpropagation based on the first evaluation value and the second evaluation value.

2. The learning apparatus according to claim 1, further comprising:

    a third evaluation value acquisition unit configured to acquire a third evaluation value calculated by a third loss function configured to evaluate a feature that emphasizes a contour of the recognition target, wherein
    the learning execution unit performs learning to optimize the model by performing backpropagation based on the first evaluation value, the second evaluation value, and the third evaluation value.

3. The learning apparatus according to claim 1, wherein the second evaluation value acquisition unit includes:

    a first element product calculation unit configured to calculate a first element product matrix obtained by multiplying elements of correct matrix data indicating a correct position of a segmentation mask of the recognition target, and matrix data obtained by moving the correct position of the segmentation mask;
    a second element product calculation unit configured to calculate a second element product matrix obtained by multiplying elements of prediction matrix data indicating a predicted position of the segmentation mask of the recognition target, and matrix data obtained by moving the predicted position of the segmentation mask as with the correct segmentation mask; and
    an evaluation value calculation unit configured to calculate the second evaluation value with a difference between the first element product matrix and the second element product matrix as the second loss function.

4. The learning apparatus according to claim 3, wherein

    the recognition target is an object having a linear shape, and
    the first element product calculation unit calculates a first element product matrix obtained by multiplying elements of matrix data obtained by moving the correct position of the segmentation mask in a longitudinal direction of the linear shape.

5. An image segmentation apparatus configured to perform segmentation of a recognition target in an image using a model, wherein

    the model is a model trained by the learning apparatus according to claim 1, and
    the image segmentation apparatus comprises a segmentation execution unit configured to perform the segmentation of the recognition target in the image using the model learned.

6. A learning method of training a model in an image segmentation apparatus configured to perform segmentation of a recognition target in an image using the model, the learning method including the steps of:

    acquiring a first evaluation value calculated by a first loss function configured to evaluate a feature configured to identify the recognition target in the image;
    acquiring a second evaluation value calculated by a second loss function configured to evaluate a continuity of the recognition target identified in the image; and
    performing learning to optimize the model by performing backpropagation based on the first evaluation value and the second evaluation value.

7. A program for a computer configured to execute training of a model in an image segmentation apparatus configured to perform segmentation of a recognition target in an image using the model, the program being configured to cause the computer to function as:

a first evaluation value acquisition unit configured to acquire a first evaluation value calculated by a first loss function configured to evaluate a feature configured to identify the recognition target in the image;

a second evaluation value acquisition unit configured to acquire a second evaluation value calculated by a second loss function configured to evaluate a continuity of the recognition target identified in the image; and

a learning execution unit configured to perform learning to optimize the model by performing backpropagation based on the first evaluation value and the second evaluation value.

[FIG. 1]

[FIG. 2]

[FIG. 3]

[FIG. 4]

```
                    ┌─────────────┐
                    │    START    │
                    └─────────────┘
                           │
                           ▼
     ┌──────────────────────────────────────────┐
     │ CALCULATE FIRST EVALUATION VALUE USING FIRST │  ⟋ S101
     │              LOSS FUNCTION                 │
     └──────────────────────────────────────────┘
                           │
                           ▼
     ┌──────────────────────────────────────────┐
     │  CALCULATE SECOND EVALUATION VALUE USING   │  ⟋ S102
     │             SECOND LOSS FUNCTION           │
     └──────────────────────────────────────────┘
                           │
                           ▼
     ┌──────────────────────────────────────────┐
     │  CALCULATE THIRD EVALUATION VALUE USING THIRD │  ⟋ S103
     │              LOSS FUNCTION                 │
     └──────────────────────────────────────────┘
                           │
                           ▼
     ┌──────────────────────────────────────────┐
     │   OPTIMIZE MODELS BASED ON FIRST TO THIRD  │  ⟋ S104
     │            EVALUATION VALUES               │
     └──────────────────────────────────────────┘
                           │
                           ▼
                    ┌─────────────┐
                    │     END     │
                    └─────────────┘
```

(1)

GT1
| 0 | 0 | 0 | 0 | 0 |
|---|---|---|---|---|
| 0 | 0 | 0 | 0 | 0 |
| 0 | 1 | 1 | 1 | 0 |
| 0 | 0 | 1 | 0 | 0 |
| 0 | 0 | 0 | 0 | 0 |

×

GT2
| 0 | 0 | 0 | 0 | 0 |
|---|---|---|---|---|
| 0 | 0 | 0 | 0 | 0 |
| 0 | 0 | 0 | 0 | 0 |
| 0 | 0 | 1 | 1 | 1 |
| 0 | 0 | 0 | 1 | 0 |

=

MT1
| 0 | 0 | 0 | 0 | 0 |
|---|---|---|---|---|
| 0 | 0 | 0 | 0 | 0 |
| 0 | 0 | 0 | 0 | 0 |
| 0 | 0 | 1 | 0 | 0 |
| 0 | 0 | 0 | 0 | 0 |

(2)

MS GT3
| 0.6 | 0.4 | 0.4 | 0.4 | 0.5 |
|-----|-----|-----|-----|-----|
| 0.5 | 0.9 | 0.9 | 0.9 | 0.5 |
| 0.4 | 0.9 | 0.9 | 0.9 | 0.4 |
| 0.4 | 0.5 | 0.8 | 0.5 | 0.4 |
| 0.3 | 0.2 | 0.5 | 0.2 | 0.3 |

×

GT4 MS
| 0.3 | 0.2 | 0.5 | 0.2 | 0.3 |
|-----|-----|-----|-----|-----|
| 0.5 | 0.6 | 0.4 | 0.4 | 0.4 |
| 0.4 | 0.5 | 0.9 | 0.9 | 0.9 |
| 0.4 | 0.4 | 0.9 | 0.9 | 0.9 |
| 0.3 | 0.4 | 0.5 | 0.8 | 0.5 |

=

MT2
| 0.18 | 0.08 | 0.2  | 0.08 | 0.15 |
|------|------|------|------|------|
| 0.25 | 0.54 | 0.36 | 0.36 | 0.2  |
| 0.16 | 0.45 | 0.81 | 0.81 | 0.36 |
| 0.16 | 0.2  | 0.72 | 0.45 | 0.36 |
| 0.05 | 0.08 | 0.25 | 0.16 | 0.15 |

(3)

MT1
| 0 | 0 | 0 | 0 | 0 |
|---|---|---|---|---|
| 0 | 0 | 0 | 0 | 0 |
| 0 | 0 | 0 | 0 | 0 |
| 0 | 0 | 1 | 0 | 0 |
| 0 | 0 | 0 | 0 | 0 |

−

MT2
| 0.18 | 0.08 | 0.2  | 0.08 | 0.15 |
|------|------|------|------|------|
| 0.25 | 0.54 | 0.36 | 0.36 | 0.2  |
| 0.16 | 0.45 | 0.81 | 0.81 | 0.36 |
| 0.16 | 0.2  | 0.72 | 0.45 | 0.36 |
| 0.09 | 0.08 | 0.25 | 0.16 | 0.15 |

[FIG. 5]

EP 4 583 044 A1

[FIG. 6]

```
        ┌───────────┐
        │   START   │
        └─────┬─────┘
              │
              ▼
    ┌─────────────────────┐
    │  ACQUIRE IMAGE DATA │ ── S201
    └──────────┬──────────┘
               │
               ▼
    ┌───────────────────────────┐
    │ PERFORM INSTANCE          │ ── S202
    │ SEGMENTATION USING MODEL  │
    └──────────┬────────────────┘
               │
               ▼
        ┌───────────┐
        │    END    │
        └───────────┘
```

[FIG. 7]

(A)                                    (B)

# EP 4 583 044 A1

## INTERNATIONAL SEARCH REPORT

| International application No. |
|---|
| **PCT/JP2023/030132** |

### A. CLASSIFICATION OF SUBJECT MATTER

***G06T 7/00***(2017.01)i; ***G06T 7/10***(2017.01)i
FI:    G06T7/00 350C; G06T7/10

According to International Patent Classification (IPC) or to both national classification and IPC

### B. FIELDS SEARCHED

Minimum documentation searched (classification system followed by classification symbols)

G06T7/00; G06T7/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | CHEN, Xu et al. Learning Active Contour Models for Medical Image Segmentation. 2019 IEEE/CVF Conference on Computer Vision and Pattern Recognition (CVPR) [online]. 15 June 2019, [retrieval date 14 September 2023], pp. 11624-11632, internet <URL: https://ieeexplore.ieee.org/document/8953484> 1. Introduction to 3.1. AC Loss Function, fig. 2 | 1, 5-7 |
| A |  | 2-4 |

☐ Further documents are listed in the continuation of Box C.      ☐ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 September 2023** | **17 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022139818 A

- JP 2021184163 A